# EUROPÄISCHE PATENTANMELDUNG

(11) **EP 2 942 606 A1**
(43) Veröffentlichungstag der Anmeldung: **11.11.2015**
(21) Anmeldenummer: 15163317.9
(22) Anmeldetag: 13.04.2015
(51) Int. Cl.: G01D 5/22

(54) **INDUKTIVER WEGSENSOR UND KOLBENZYLINDER-ANORDNUNG**

(30) Priorität: 09.05.2014 DE 102014208724
(71) Anmelder: Schaeffler Technologies AG & Co. KG, 91074 Herzogenaurach (DE)
(72) Erfinder: Jung, Christoph, 77815 Bühl (DE); Herrmann, Tim, 76461 Muggensturm (DE); Giesel, Christian, 79312 Emmendingen (DE)

(57) **Zusammenfassung**

Die Erfindung betrifft einen induktiver Wegsensor, umfassend ein Spulensystem mit einer planaren Primärspule zur Erzeugung eines Magnetfeldes und zwei innerhalb der Primärspule angeordneten planaren Sekundärspulen zur Sensierung einer Position eines Targets, welches entlang der Sekundärspulen bewegbar ist, wobei die Sekundärspulen jeweils eine Überkreuzung aufweisen. Bei einem induktiven Wegsensor, welcher in seinen geometrischen Abmaßen stark verkürzt ist, sind die zwei identischen Sekundärspulen räumlich getrennt zueinander angeordnet sind, wobei die Überkreuzung jeder Sekundärspule parallel zur Bewegungsrichtung des Targets ausgerichtet ist.

## Beschreibung

Die Erfindung betrifft einen induktiver Wegsensor, umfassend ein Spulensystem mit einer planaren Primärspule zur Erzeugung eines Magnetfeldes und zwei innerhalb der Primärspule angeordneten planaren Sekundärspulen zur Sensierung einer Position eines Targets, welches entlang der Sekundärspulen bewegbar ist, wobei die Sekundärspulen jeweils eine Überkreuzung aufweisen.

Aus der DE 10 2012 207 875 A1 ist eine Kolben-Zylinder-Anordnung bekannt, die einen Kolben aufweist, der axial beweglich in einem Zylinder angeordnet ist, wobei an der Kolben-Zylinder-Anordnung ein Sensorsystem zur induktiven Wegaufnahme positioniert ist. An dem Kolben sind wenigstens zwei Targets aus einem elektrisch leitenden Material angeordnet, die radial und axial voneinander beabstandet sind. An dem Zylinder ist ein induktiver Sensor angeordnet, der wenigstens eine Primärspule zur Erzeugung eines Magnetfeldes und wenigstens zwei innerhalb der Primärspule angeordnete Sekundärspulen zur Sensierung der Targetposition aufweist, wobei die Spulenachsen senkrecht zur Bewegungsrichtung des Kolbens verlaufen.

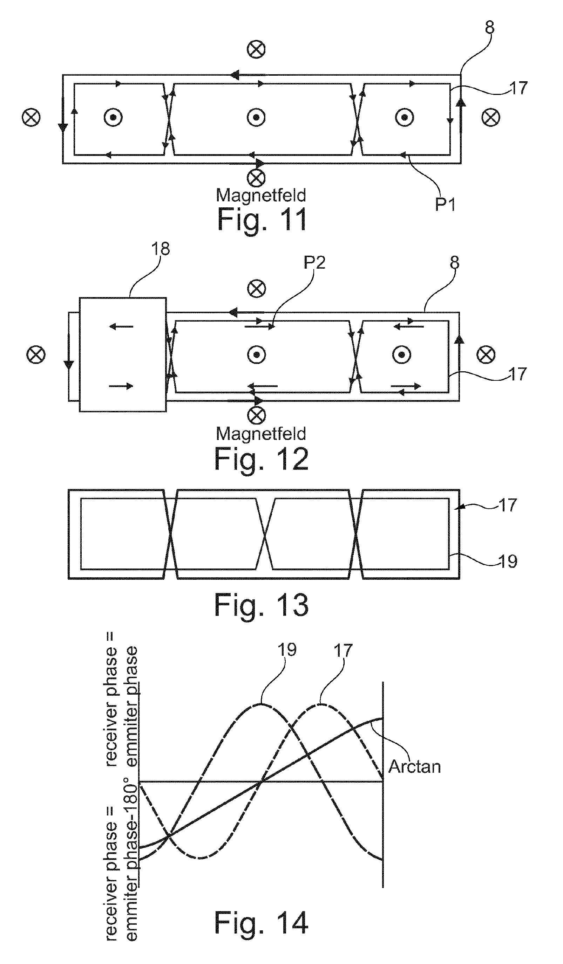

Schematisch ist ein solches induktives Messsystem in Figur 11 dargestellt. Die Primärspule 8 erzeugt aufgrund eines vorgegebenen Stromflusses ein Magnetfeld, das in den Windungen der Sekundärspule 17 Spannungen induziert. Beide Spulen 8, 17 befinden sich auf einer Sensorplatine. Die Sekundärspule 17 ist so gestaltet, dass sich ihre Windung selbst kreuzt. Dadurch entstehen Schleifen mit gegensätzlichem Windungssinn, so dass die in den unterschiedlichen Bereichen induzierten Spannungen ebenfalls gegensätzliche Vorzeichen besitzen (siehe Pfeile P1). Die Flächen der Schleifen sind identisch, so dass der Betrag der Spannungen gleich ist. Im Basiszustand heben sich demnach alle induzierten Spannungen gegenseitig auf. Wird nun, wie in Fig. 12 dargestellt, ein elektrisch leitender Körper in Form eines Targets 18 über die Sekundärspule 17 bewegt, ändert sich lokal das Magnetfeld, so dass sich die induzierten Spannungsanteile in der Sekundärspule 74 nicht mehr komplett gegenseitig aufheben. Es fließt ein Strom bzw. es kann eine Spannung gemessen werden, die in Fig. 12 durch die Pfeile P2 verdeutlicht ist.

Wird nun das Target 18 über die Sensorplatine hinweg bewegt, ändern sich die Verhältnisse der lokal beeinflussten Magnetfelder in den einzelnen Bereichen. Dementsprechend ergibt sich für jede Targetposition ein anderer Strom. Um eine eindeutige Wegmessung zu ermöglichen, ist eine zweite Sekundärspule 19 eingesetzt, die zu der ersten axial versetzt ist (Fig. 13).

Zur Auswertung dieser Sensorsignale S17, S19 der zwei Sekundärspulen 17, 19 wird ein Arcustangens des Quotienten der beiden Spulensignale S17, S19 gebildet. Sind die Signale S17, S19 der beiden Sekundärspulen 17, 19 um 90° phasenverschoben, wie es in Fig. 14 dargestellt ist, so ergibt sich aus der Berechnung des Arcustangens Arctan ein näherungsweiser linearer Verlauf über den gesamten, von dem Target 18 zurückgelegten Messweg. Die Ausgangssignale S17, S19 der Sekundärspulen 17, 19 werden hierbei durch die Geometrie des Sekundärspulen 17, 19 moduliert.

Das beschriebene induktive Messsystem erfordert relativ viel Bauraum, da die Sensorplatine mindestens so lang sein muss wie der zu detektierende Messweg. Bei der Anwendung in einem Kraftfahrzeug steht aber nur begrenzt Bauraum zur Verfügung, weshalb solche induktiven Messsysteme dort nur beschränkt einsetzbar sind.

Der Erfindung liegt die Aufgabe zugrunde, einen induktiven Wegsensor anzugeben, der nach dem induktiven Messprinzip arbeitet, aber bei welchem die Sensorplatine kürzer ist als der zu detektierende Messweg.

Erfindungsgemäß wird die Aufgabe dadurch gelöst, dass die zwei identischen Sekundärspulen räumlich getrennt zueinander angeordnet sind, wobei die Überkreuzung jeder Sekundärspule parallel zur Bewegungsrichtung des Targets ausgerichtet ist. Dies hat den Vorteil, dass die Ausdehnung der Sekundärspulen und somit der Sensorplatine, auf welchen die Sekundärspulen angeordnet sind, verkürzt werden kann. Aufgrund dieses kleineren induktiven Sensorsystems wird bei der Anwendung in einem Kupplungsbetätigungssystem entscheidend weniger Bauraum benötigt.

Vorteilhafterweise beträgt der Abstand der innerhalb der Primärspule angeordneten zwei identischen, zueinander elektrisch gespiegelten Sekundärspulen annähernd einen halben Messweg. Dadurch ergibt sich eine Reduktion der Gesamtspulenlänge und somit der Sensorplatine um ca. 50 %.

In einer Ausgestaltung ist das Target rautenförmig ausgebildet. Bei der Verwendung eines rautenförmigen Targets und der Sekundärspulen mit nur einer Überkreuzung parallel zum Messweg ergibt sich ein näherungsweise lineares Ausgangssignal des induktiven Wegsensors, welches eindeutig der Position des Targets zuzuordnen ist.

In einer Alternative weisen die zwei identischen, die gleiche elektrische Orientierung aufweisenden Sekundärspulen jeweils zwei Überkreuzungen auf, welche parallel zur Bewegungsrichtung des rotationssymmetrisch ausgebildeten Targets ausgerichtet sind. Auch mit einem solchen Sensorsystem ist ein annähernd lineares Ausgangssignal, welches eindeutig einem durch das Target zurückgelegten Weg zuzuordnen ist, möglich. Allerdings tritt durch die Veränderung der Verhältnisse der Spulenflächen eine Verschiebung des Spulennullpunktes auf, welcher aber in einer Auswerteelektronik des induktiven Wegsensors durch Kompensation einer Offset-Spannung einfach korrigierbar ist.

In einer Variante weist das rotationssymmetrische Target je nach elektrischer Orientierung der Sekundärspulen in seiner axialen Ausdehnung annähernd mittig eine Taillierung oder eine Ausbauchung auf. Somit ist das Target den geometrischen Verhältnissen der Sekundärspulen angepasst, was sich in einem stetigen Ausgangssignal widerspiegelt.

In einer weiteren Ausführungsform verjüngt sich eine, sich in Bewegungsrichtung des Targets erstreckende Außenkontur des Targets bei einer elektrischen Plus-Minus-Plus-Orientierung der zwei Überkreuzungen aufweisenden Sekundärspulen bis zur Mitte, vorzugsweise stufenweise, wobei eine Randausdehnung des Targets der Längserstreckung der Sekundärspulen senkrecht zu der Bewegungsrichtung des Targets entspricht, während eine Breite der Taillierung des Targets der Länge der mittleren Windung der Sekundärspulen senkrecht zur Bewegungsrichtung entspricht.

Alternativ dazu wird die sich in Bewegungsrichtung des Targets erstreckende Außenkontur des Targets bei einer elektrischen Minus-Plus-Minus-Orientierung der zwei Überkreuzungen aufweisenden Sekundärspulen bis zur Mitte, vorzugsweise stufenweise, aufgeweitet, wobei eine Randausdehnung des Targets der Länge der mittleren Windung der Sekundärspulen senkrecht zu der Bewegungsrichtung des Targets entspricht, während eine Breite der Ausbauchung des Targets der Längserstreckung der Sekundärspulen entspricht. Um über den Messweg ein eindeutiges Ausgangssignal erlangen zu können, entspricht eine Ausdehnung des Targets in dessen Bewegungsrichtung einer Länge des Messweges.

Eine Weiterbildung der Erfindung betrifft eine Kolben-Zylinder-Anordnung, insbesondere zur Verwendung in einem hydraulischen System zur Kupplungsbetätigung in einem Fahrzeug, mit einem Kolben, welcher axial beweglich in einem Zylinder angeordnet ist und einem induktiven Wegsensor, dessen Target fest am Kolben positioniert ist und dessen Spulensystem an dem Zylinder angeordnet ist. Bei einer Kolben-Zylinder-Anordnung, welche nur wenig Bauraum benötigt, ist der induktive Wegsensor nach mindestens einem in dieser Schutzrechtsanmeldung beschriebenen Merkmal ausgebildet.

Die Erfindung lässt zahlreiche Ausführungsformen zu. Zwei davon sollen anhand der in der Zeichnung dargestellten Figuren näher erläutert werden.

Es zeigen:
- Fig. 1:: eine Prinzipdarstellung einer Kolben-Zylinder-Anordnung,
- Fig. 2:: ein erstes Ausführungsbeispiel eines erfindungsgemäßen Spulensystems,
- Fig. 3:: eine Anordnung des erfindungsgemäßen Spulensystems nach Fig. 2 in einer Primärspule,
- Fig. 4:: ein Ausgangssignal des gemäß Fig. 2 bezeichneten Spulensystems mit einem rautenförmigen Target,
- Fig. 5:: Ausführungsbeispiele für ein rautenförmiges Target,
- Fig. 6:: ein zweites Ausführungsbeispiel eines erfindungsgemäßen Spulensystems,
- Fig. 7:: Anordnung des zweiten Ausführungsbeispiels des Spulensystems in einer Primärspule,
- Fig. 8:: ein erstes Ausführungsbeispiel für ein rotationssymmetrisches Target,
- Fig. 9:: ein zweites Ausführungsbeispiel für ein rotationssymmetrisches Target,
- Fig. 10:: das Ausgangssignal der Sekundärspulen bei der Verwendung eines rotationssymmetrischen Targets,
- Fig. 11:: ein Spulensystem nach dem Stand der Technik,
- Fig. 12:: ein von einem Target überstrichenes Spulensystem nach dem Stand der Technik,
- Fig. 13:: typische Konstellation mit zwei Sekundärspulen nach dem Stand der Technik,
- Fig. 14:: Ausgangssignal der Sekundärspule nach dem Stand der Technik.

Gleiche Merkmale sind mit gleichen Bezugszeichen gekennzeichnet.

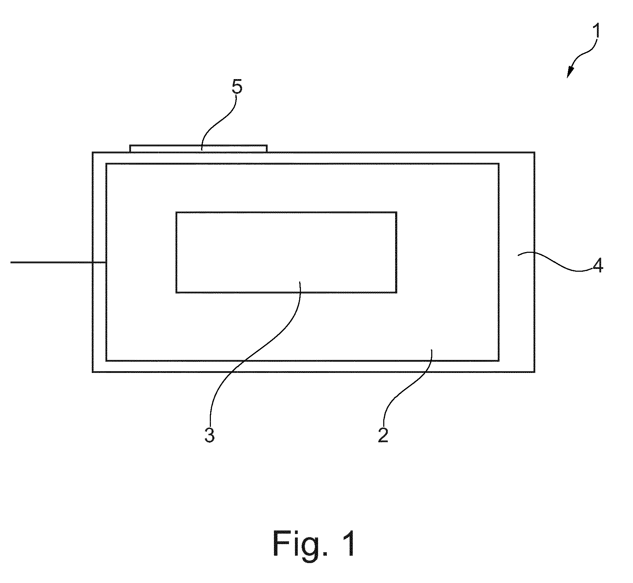

In Fig. 1 ist eine Kolben-Zylinder-Anordnung 1 dargestellt, wie sie in einem Geberzylinder eines Kupplungsbetätigungssystems eines Kraftfahrzeuges zur Anwendung kommt. Der Geberzylinder weist einen Kolben 2 auf, welcher aus einem Kunststoff besteht und an welchen ein Target 3, das aus einem elektrisch leitenden Material besteht, angeordnet ist. An der Außenwand eines Zylinders 4 der Kolben-Zylinder-Anordnung 1 ist eine Platine 5 angeordnet, die ein Spulensystem trägt. Bei der Bewegung des Kolbens 2 wird ebenfalls das Target 3 an dem auf der Platine 5 angeordneten Spulensystem vorbeibewegt.

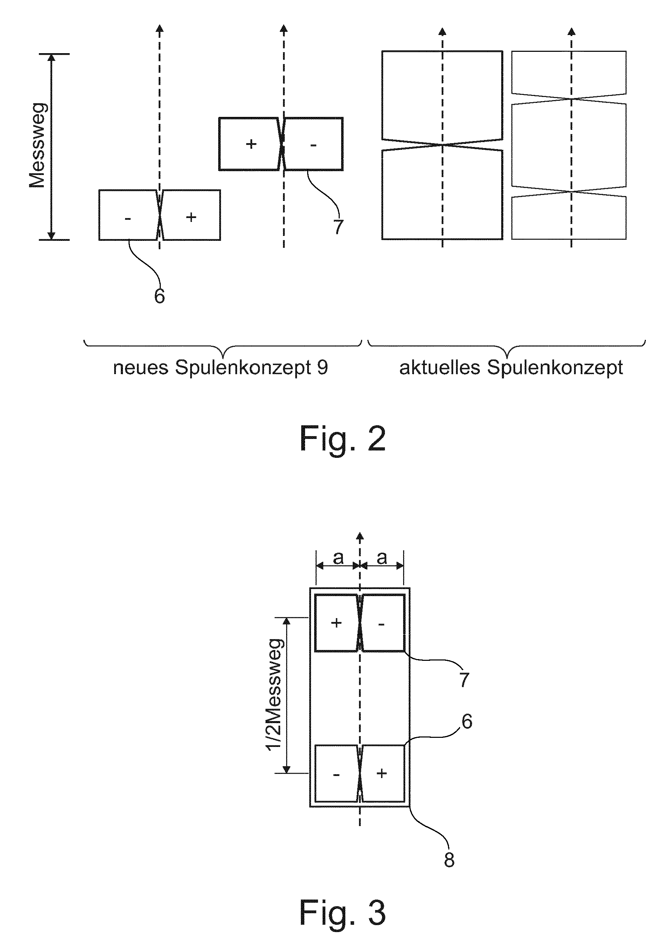

Das auf der Platine 5 angeordnet Spulensystem 9 ist in Fig. 2 dargestellt und gleichzeitig einem gebräuchlichen Spulensystem des Standes der Technik gegenübergestellt. Das neue Spulensystem 9 umfasst zwei identische Flächen überstreichende, zueinander elektrisch gespiegelte Sekundärspulen 6, 7, die jeweils eine Überkreuzung parallel zur Bewegungsachse des Targets 3 aufweisen. Im Gegensatz dazu ist bei dem Spulenkonzept nach dem Stand der Technik die Überkreuzung der Sekundärspulen quer zur Bewegungsachse, d.h. zum Messweg ausgerichtet.

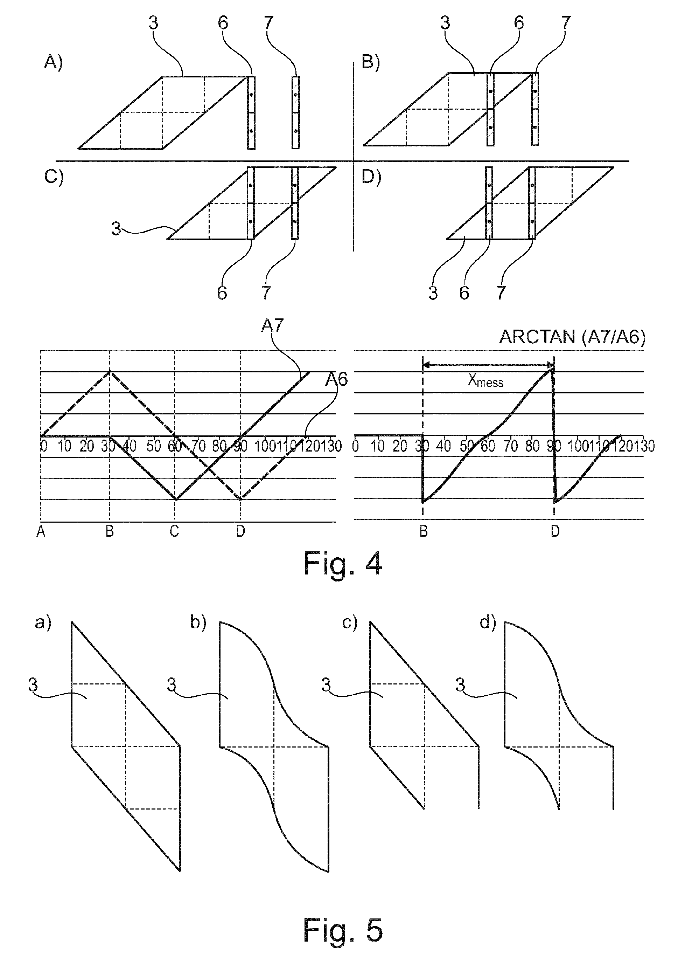

Wie aus Fig. 3 hervorgeht, wo die beiden, elektrisch zueinander gespiegelten Sekundärspulen 6, 7 innerhalb der, das Magnetfeld erzeugenden Primärspule 8 angeordnet sind, beträgt der Abstand zwischen den beiden Sekundärspulen 6. 7 einen halben Messweg. Die Flächen, welche von den Schleifen der jeweiligen Sekundärspulen 6, 7 überstrichen werden, sind konstant. Die Sekundärspulen 6, 7 sind dabei in den inneren Grenzbereichen der Primärspule 8 angeordnet, um die geometrische Ausdehnung des Spulensystems 9 so gering wie möglich zu halten. Bei dem in Fig. 3 dargestellten Spulensystem 9 kommt ein rautenförmiges Target 3 zum Einsatz, welches eine Längsausdehnung von der Länge des Messweges aufweist. Ein solches rautenförmiges Target 3 ist in Fig. 4 in verschiedenen Positionen A, B, C, D dargestellt. Den verschiedenen Positionen A, B, C, D ist ein Ausgangssignal A6, A7 der beiden Sekundärspulen 6, 7 zugeordnet. Steht das rautenförmige Target 3 in der Position A vor der ersten Sekundärspule 6 wird von keiner der beiden Sekundärspulen 6, 7 ein Ausgangssignal abgegeben, da das Magnetfeld noch nicht beeinflusst wurde. In der Position B überfährt das rautenförmige Target 3 eine erste Schleife der ersten Sekundärspule 6, welche eine positive Spannung erzeugt und bleibt vor der ersten Schleife der zweiten Sekundärspule 7 stehen. In dieser Position B gibt die erste Sekundärspule 6 ein positives Maximalsignal A6 ab, während die zweite Sekundärspule 7 weiterhin kein Ausgangsignal A7 ausgibt. Bewegt sich das rautenförmige Target 3 weiter zur Position C, wo die gesamte erste Sekundärspule 6 und die erste Schleife der zweiten Sekundärspule 7 überstrichen werden, so summieren sich in der ersten Sekundärspule 6 die beiden entgegengesetzten Spannungen der beiden Schleifen zu einem Ausgangssignal A6 von 0 Volt. Die zweite Sekundärspule 7, von der nur eine, eine negative Spannung abgebende Schleife vom Target 3 überstrichen ist, gibt dabei ein maximales negatives Ausgangssignal A7 aus. Diese Ausgangssignale A6, A7 wiederholen sich in umgekehrter Richtung, wenn das rautenförmige Target 3 weiter in Position D verschoben wird, wo nur die zweite Schleife der ersten Sekundärspule 6, die zweite Sekundärspule 7 aber vollständig von dem Target 3 abgedeckt ist. In der zweiten Schleife der ersten Sekundärspule 6 wird aufgrund der elektrischen Orientierung dieser Schleife ein maximales negatives Ausgangssignal A6 abgegeben, während sich das Ausgangssignal A7 der zweiten Sekundärspule 7 aufgrund der entgegengesetzten elektrischen Spannungen in den beiden abgedeckten Schleifen auf null summiert. Wie aus Fig. 4 ersichtlich, wird aus dem Arcustangens des Quotienten der Ausgangssignale S6, S7 der ersten bzw. der zweiten Sekundärspule 6, 7 über dem Messweg, welcher durch die Positionen B, C und D gekennzeichnet ist, ein stetiges und annähernd lineares Ausgangssignal des induktiven Wegsensors erhalten, wobei jedem Punkt des Ausgangssignales eindeutig eine Position des Targets 3 zuordenbar ist.

Das rautenförmige Target 3 muss dabei nicht scharfeckig (Fig. 5a) ausgebildet sein, sondern kann wie in Fig. 5b ersichtlich, auch eine weiche sinus- bzw. kosinusähnliche Geometrie aufweisen, woraus ebenfalls der Arcustangens aus dem Quotienten der Ausgangssignale S6, S7 der Sekundärspule 6 und der zweiten Sekundärspule 7 gewonnen werden kann. Aufgrund der Ausdehnung des Targets 3 über den gesamten Messweg ist eine vollständige spiegelsymmetrische Realisierung des rautenförmigen Targets 3 nicht unbedingt notwendig, wie aus Fig. 5c und 5d ersichtlich, weshalb aber trotzdem ein ausreichendes Ausgangssignal des induktiven Wegsensors gewonnen wird.

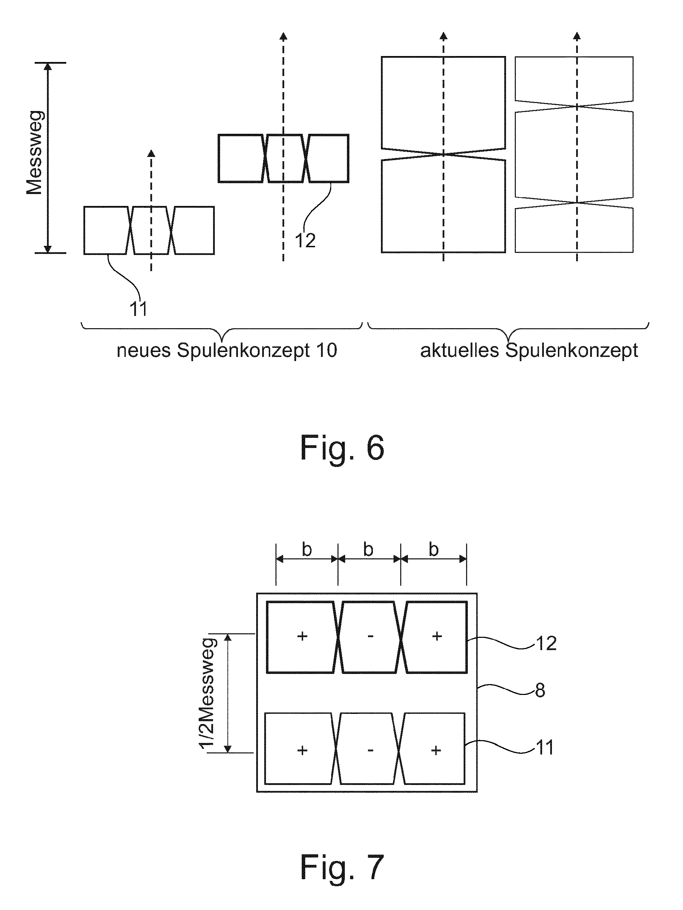

In Fig. 6 ist ein weiteres erfindungsgemäßes Spulensystem 10 im Vergleich zu dem Spulenkonzept des Standes der Technik dargestellt, welches aus zwei räumlich getrennten Sekundärspulen 11, 12 besteht, die aber eine gleiche elektrische Orientierung aufweisen und die jeweils zwei Überkreuzungen besitzen, wobei sich die Überkreuzungen parallel zur Bewegungsrichtung eines Targets 13 erstrecken. Das veränderte Spulenverhältnis beträgt dabei 2:1 im Gegensatz zu dem im Zusammenhang mit Fig. 2 dargestellten Spulensystem 9. Die Anordnung der beiden Sekundärspulen 11, 12 innerhalb der Primärspule 8 erfolgt ebenfalls mit einem räumlichen Abstand von einem halben Messweg. Die einzelnen Flächen, welche durch die zwei Überkreuzungen in drei Schleifen aufgeteilt sind, besitzen dabei die gleichen geometrischen Abmaße (Fig. 7).

Ein solches zweites Spulensystem 10 kann mit einem rotationssymmetrischen Target 13 betrieben werden. Dabei tritt durch die veränderten Verhältnisse der Schleifen der Sekundärspulen 11, 12 allerdings eine Verschiebung des Spulennullpunktes auf. Es kommt zu einem Stromfluss, auch wenn sich kein Target 13 in der Nähe der Sekundärspulen 11, 12 befindet. Dieser Stromfluss resultiert in einer Offset-Spannung, welche vor Weiterverarbeitung der Messsignale kompensiert werden muss.

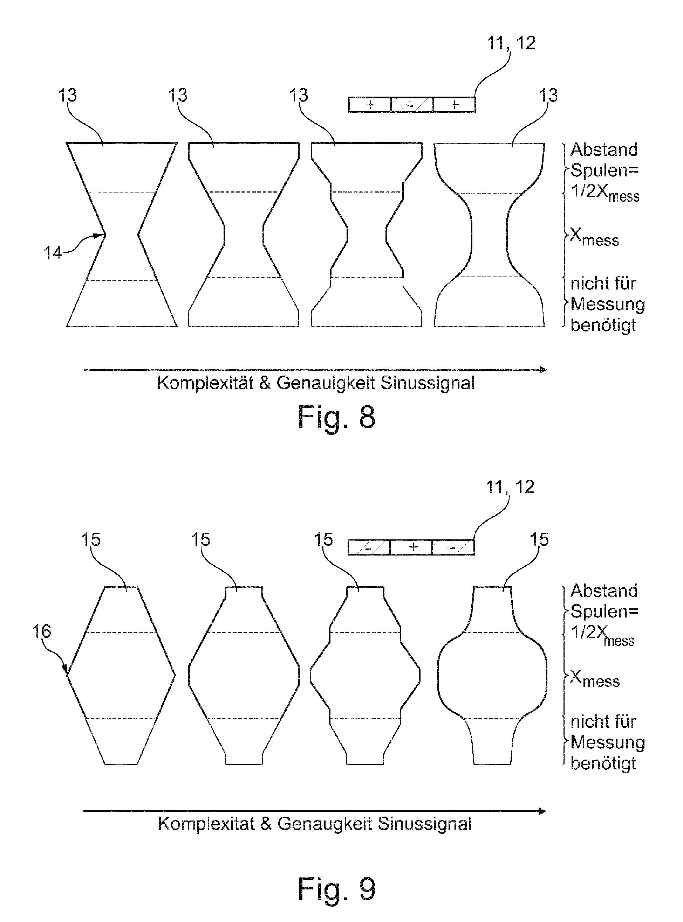

In Fig. 8 und Fig. 9 sind verschiedene mögliche rotationssymmetrische Geometrieen des Targets 13 für das zweite Spulensystem 10 dargestellt. Bei einer elektrischen Orientierung der Sekundärspulen 11, 12 von plus-minus-plus weist dieses rotationssymmetrische Target 13 eine Taillierung 14 in axialer Ausdehnung des Targets 13 auf, wobei die Taillierung 14 der Breite des mittleren, mit einer negativen Spannung belegten Schleife der Sekundärspulen 11, 12 entspricht (Fig. 8). Die Ausdehnung des Randbereiches des Targets 13 entspricht dabei der Längserstreckung der Sekundärspule, 11, 12, welche diese senkrecht zur Bewegungsrichtung des Targets 13 einnehmen. Wie aus Fig. 8 hervorgeht, wird nicht das gesamte Target 13 in seiner axialen Längsausdehnung benötigt und kann daher verkürzt werden. Das Target 13 kann auch in seiner Außenkontur gestuft ausgebildet sein, wobei der Abstand zwischen diesen Stufungen jeweils einem halben Messweg entspricht. Die Ausdehnung zwischen der Taillierung 14 und dem Randbereich des Targets 13 entspricht dabei dem Messweg xₘₑₛₛ.

Eine zweite Ausführungsform des rotationssymmetrischen Targets 15 ist in Fig. 9 dargestellt, welches zum Einsatz kommt, wenn die Sekundärspulen 11, 12 eine elektrische Orientierung von minus-plus-minus aufweisen. In diesem Fall weist das Target 15 eine Ausbauchung 16 in seiner Mitte auf, wobei auch hier der Abstand zwischen Randbereich und Mitte des Targets 15 jeweils dem Messweg xₘₑₛₛ entspricht. Die Targetaußenkonturen können unterschiedlich abgestuft sein, wobei die geometrische Abmessung des Randbereiches des Targets15 in diesem Fall der Länge des mittleren Schleife der Sekundärspulen 11, 12 entspricht, welche sich senkrecht zur Bewegungsrichtung des Targets 15 ausdehnt.

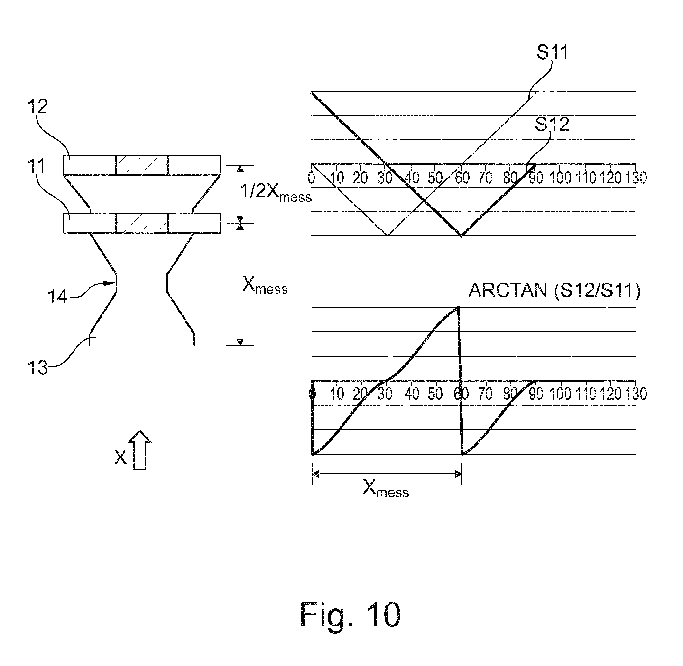

In Fig. 10 sind die Sekundärspulen 11 und 12 dargestellt, welche von dem rotationssymmetrischen Target 13 gemäß Fig. 7 überstrichen werden. Die beiden Sekundärspulen 11, 12 geben die in Fig. 10b dargestellte Ausgangssignale A11, A12 ab. Die Bildung des Arcustangens Arctan aus dem Quotienten der Ausgangssignals A12 der zweiten Sekundärspule 12 durch das Ausgangssignal A11 der ersten Sekundärspule 11 ergibt über den Messweg xₘₑₛₛ ebenfalls ein lineares Ausgangssignal des induktiven Wegsensors.

Beide hier vorgestellte Spulensysteme 9, 10 bieten eine Verringerung des Bauraumbedarfs des induktiven Wegsensors um rund 50 %. Für den rautenförmigen Ansatz des Targets 3 muss beachtet werden, dass das Target 3 einen Verdrehschutz am Kolben 2 benötigt, da dieses nicht rotationssymmetrisch ist. Auf einem solchen Verdrehschutz kann verzichtet werden, wenn das Spulensystem 10 mit den geänderten Spulenverhältnissen eingesetzt wird. Dabei muss lediglich eine Offset-Kompensation in die Auswerteschaltung des induktiven Wegsensors integriert werden.

### Bezugszeichenliste

- 1: Kolben-Zylinder-Anordnung
- 2: Kolben
- 3: Target
- 4: Zylinder
- 5: Platine
- 6: Sekundärspule
- 7: Sekundärspule
- 8: Primärspule
- 9: Spulensystem
- 10: Spulensystem
- 11: Sekundärspule
- 12: Sekundarspule
- 13: Target
- 14: Taillierung
- 15: Target
- 16: Ausbauchung

## Patentansprüche

1. Induktiver Wegsensor, umfassend ein Spulensystem (9, 10) mit einer planaren Primärspule (8) zur Erzeugung eines Magnetfeldes und zwei innerhalb der Primärspule (8) angeordneten planaren Sekundärspulen (6, 7; 11, 12) zur Sensierung einer Position eines Targets (3, 13, 15), welches entlang der Sekundärspulen (6, 7; 11, 12) bewegbar ist, wobei die Sekundärspulen (6, 7; 11, 12) jeweils eine Überkreuzung aufweisen, **dadurch gekennzeichnet, dass** die zwei identischen Sekundärspulen (6, 7; 11, 12) räumlich getrennt zueinander angeordnet sind, wobei die Überkreuzung jeder Sekundärspule (6, 7; 11, 12) parallel zur Bewegungsrichtung des Targets (3, 13, 15) ausgerichtet ist.

2. Induktiver Wegsensor nach Anspruch 1, **dadurch gekennzeichnet, dass** der Abstand der innerhalb der Primärspule (8) angeordneten zwei identischen, zueinander elektrisch gespiegelten Sekundärspulen (6, 7) annähernd einen halben Messweg (x_{Mess}) beträgt.

3. Induktiver Wegsensor nach Anspruch 1 oder 2, **dadurch gekennzeichnet, dass** das Target (3) rautenförmig ausgebildet ist.

4. Induktiver Wegsensor nach Anspruch 1, **dadurch gekennzeichnet, dass** die zwei identischen, die gleiche elektrische Orientierung aufweisenden Sekundärspulen (11, 12) jeweils zwei Überkreuzungen aufweisen, welche parallel zur Bewegungsrichtung des rotationssymmetrisch ausgebildeten Targets (13, 15) ausgebildet sind.

5. Induktiver Wegsensor nach Anspruch 4, **dadurch gekennzeichnet, dass** das rotationssymmetrische Target (13, 15) je nach elektrischer Orientierung der Sekundärspulen (11, 12) in seiner axialen Ausdehnung annähernd mittig eine Taillierung (14) oder eine Ausbauchung (16) aufweist.

6. Induktiver Wegsensor nach Anspruch 5, **dadurch gekennzeichnet, dass** eine, sich in Bewegungsrichtung des Targets (13) erstreckende Außenkontur des Targets (13) bei einer elektrischen Plus-Minus-Plus-Orientierung der zwei Überkreuzungen aufweisenden Sekundärspulen (11, 12) sich bis zur Mitte, vorzugsweise stufenweise, verjüngt, wobei eine Randausdehnung des Targets (13) der Längserstreckung der Sekundärspulen (11, 12) senkrecht zu der Bewegungsrichtung des Targets (13) entspricht, während eine Breite der Taillierung (14) des Targets (13) der Länge der mittleren Schleife der Sekundärspulen (11, 12) entspricht.

7. Induktiver Wegsensor nach Anspruch 5, **dadurch gekennzeichnet, dass** die sich in Bewegungsrichtung des Targets (15) erstreckende Außenkontur des Targets (15) bei einer elektrischen Minus-Plus-Minus-Orientierung der zwei Überkreuzungen aufweisenden Sekundärspulen (11, 12) bis zur Mitte, vorzugsweise stufenweise, aufgeweitet ist, wobei eine Randausdehnung des Targets (15) der Länge der mittleren Schleife der Sekundärspulen (11, 12) senkrecht zur Bewegungsrichtung des Targets (15) entspricht, während eine Breite der Ausbauchung (16) des Targets (15) der Längserstreckung der Sekundärspulen (11, 12) senkrecht zur Bewegungsrichtung des Targets (15) entspricht.

8. Induktiver Wegsensor nach mindestens einem der vorhergehenden Ansprüche, **dadurch gekennzeichnet, dass** eine Ausdehnung des Targets (13, 15) in dessen Bewegungsrichtung einer Länge des Messweges (x_{Mess}) entspricht.

9. Kolben-Zylinder-Anordnung, insbesondere zur Verwendung in einem hydraulischen System zur Kupplungsbetätigung in einem Fahrzeug, mit einem Kolben (2), welcher axial beweglich in einem Zylinder (4) angeordnet ist und einem induktiven Wegsensor, dessen Target (3, 13, 15) fest am Kolben (2) positioniert ist und dessen Spulensystem (9, 10) an dem Zylinder (4) angeordnet ist, **dadurch gekennzeichnet, dass** der induktive Wegsensor nach mindestens einem der vorhergehenden Ansprüche ausgebildet ist.
